# EUROPEAN PATENT APPLICATION

(11) **EP 1 906 583 A1**
(43) Date of publication of application: **02.04.2008**
(21) Application number: 06761474.3
(22) Date of filing: 18.07.2006
(51) Int. Cl.: H04L 9/00

(54) **A SECURE PAYMENT METHOD AND SYSTEM ON NETWORK AND ROUTE SERVER**

(30) Priority: 18.07.2005 CN 200510027897
(71) Applicant: China Unionpay, Pudong, Shanghai 200122 (CN)
(72) Inventor: GUO, Rui, Pudong, Shanghai 200135 (CN); KANG, Jianming, Pudong, Shanghai 200135 (CN); YANG, Jiachu, Pudong, Shanghai 200135 (CN); LV, Xufeng, Pudong, Shanghai 200135 (CN)
(74) Representative: Palmer, Jonathan R.
(86) International application number: PCT/CN2006/001739
(87) International publication number: WO 2007/009373

(57) **Abstract**

A payment system on network provides a platform based on the existing various transaction modes so that the current transaction modes can be operated on the secure payment platform which the present invention provides. The current transaction modes has the following kinds: a free process mode of the acquirer institution, a direct authentication mode of the card issuing institution, a secure input mode of the bank union and the other patent mode which the bank applies. The secure payment system can solve the technology disadvantage that the existing transaction flow is disorder and the resource is waste. The method of the present invention not only can be realized and its security is high, but also can achieve the less consumed time and the high transaction success using the existing private network. If the present invention has not received the transaction process result within the preset time, the acquirer subsystem puts forward a request for inquiring and notifies the inquired result of the merchant, thereby the difficulty of the following clear is reduced.

## Description

### Field of the Invention

The present invention relates to the technical field of network data processing, and in particular, to a secure online payment system for online payment.

### Background of the Invention

With the development of network technologies, especially with the popularization of Internet, network has become an indispensable part for many people in life and work. People can use Internet not only for news browsing, message releasing, music downloading and listening, but also for online shopping. Based on the unceasing development of the electronic business, the security of the online payment is not only an issue to which both parties of a transaction should pay attention, but also an issue to which the financial system attaches much importance.

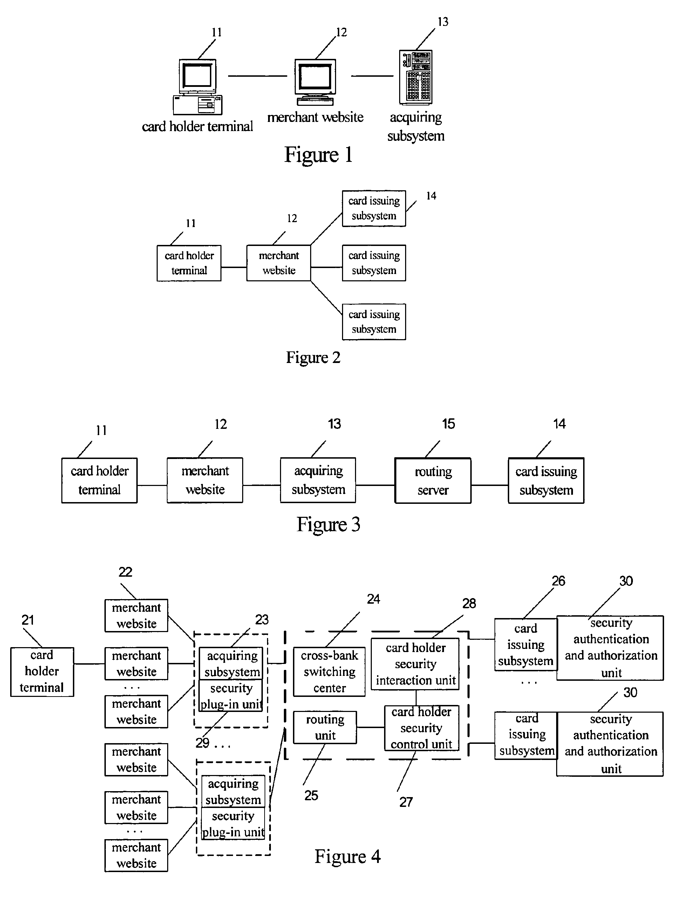

Please refer to Figure 1, which is a schematic diagram showing the structure of a normal secure online payment system in the prior art. This system includes a card holder terminal 11, a merchant website 12 and an acquiring subsystem 13. The card holder terminal 11 is connected to the merchant website 12 via Internet, and the merchant website 12 is connected to the acquiring subsystem 13 via Internet or a dedicated line. The acquiring subsystem 13 at least includes a communication server, an application server and a database server. The communication server is adapted to establish a connection with the merchant website 12 of a merchant, and perform security test for the data packet received. The application server is adapted to process various data of various merchant websites 12 received, modify the information in the database server according to the processing result, and return the processing result to the merchant server 12. The database server stores the corresponding information of each account number in the present acquiring subsystem 13.

This secure online payment system is suitable for the secure payment when the card issuing institution and the acquiring institution are the same financial institution. The process of payment is as follows: first, a card holder logs on a merchant website 12, chooses a commercial product, and confirms and submits an order; then the merchant website 12 sends the data such as order information and transaction information to a card issuing subsystem 13 of the card issuing institution. The card issuing subsystem 13 receives the data such as card number and password that is input by the user, and only when the security authentication such as card holder identity authentication and merchant identity authentication is passed, a withholding is performed. When the withholding is accomplished, the merchant delivers the commercial product.

When the card issuing institution and the acquiring institution are not the same institution, the payment may be performed with another payment system. Please refer to Figure 2, which is a schematic diagram showing the structure of another payment system according to the invention. This payment system includes a card holder terminal 11, a merchant website 12 and several card issuing subsystem 14. The card holder terminal 11 is connected to the merchant website 12 via Internet, and the merchant website 12 is connected with several card issuing subsystems 14 via Internet. The routing information of each card issuing subsystem 14 connected with the merchant website 12 is stored in the merchant website 12, and a corresponding relation between the BIN code of the card number and routing information of the card issuing subsystem 14 is established.

The process of payment is as follows: first, a card holder logs on a merchant website 12, chooses a commercial product, and confirms and submits an order; then the merchant website 12 establishes an interaction with the card holder terminal 11 and request the card holder to input the card number; after that, the merchant website 12 finds the routing information of the host corresponding to the card issuing institution of the card number according to the BIN code of the card number, and sends the card holder information and order information to the card issuing subsystem 14, so as to perform withholding.

The above payment systems and payment processes have a lot of defects. First, the security of the online payment is low. Because the number of the merchant websites in Internet is very large, and an advantageous mechanism to restrict the merchant is not available at present, the merchant website may directly obtain the card number information of the card holder, so that a great hidden danger to the property security of the card holder may be caused. Second, because an advantageous mechanism to restrict the merchant is not available, many card issuing institutions are unwilling to establish a connection with the merchant website directly, i.e., to inform the merchant of the corresponding relation between the card number BIN code and the card issuing institution as well as the routing information of the host of the card issuing institution. Thereby, the category of the bank card with which the card holder can perform payment and consumption is greatly limited.

Therefore, the VISA Company has proposed still another online payment system and an online payment process. Please refer to Figure 3, which is a schematic diagram showing the structure of an online payment system proposed by the VISA Company. This system includes a card holder terminal 11, a merchant website 12, an acquiring subsystem 13, a routing server 15 provided by the VISA Company and a card issuing subsystem 14. The routing server 15 is able to connect the acquiring subsystem 13, card issuing subsystem 14 and merchant website 12 via Internet. An MPI software provided by the acquiring subsystem 13 is configured on the merchant website 12.

First, a card holder logs on a merchant website 12, chooses a commercial product, and confirms and submits an order. Then, the merchant website sends the card holder information to the routing server 15 with the MPI software. After that, the routing server 15 finds the corresponding card issuing institution according to the card number, and returns the routing information of the card issuing subsystem 14 to the merchant website 12. Then, the card issuing subsystem 14 performs authentication on the identity of the card holder, and returns the authentication result to the card holder terminal 11 and merchant website 12 via Internet. When the authentication result is that the authentication is passed, a withholding is performed via the normal card issuing system, and the commercial product is delivered to the card holder.

The above description discloses three different system architectures for accomplishing the secure online payment in three different transaction modes adopted by the bank respectfully. Because each system can only satisfy a transaction mode, if the transaction mode configured by the card issuing bank of the bank card used by the user is different from that defined by the above systems, the user is unable to use this bank card to accomplish the secure online payment on the system, so that many data processing processes of the secure online payment cannot be accomplished.

Only a few common transaction modes of the online payment adopted by the bank is disclosed from above. Practically, the transaction modes for the online payment adopted by the bank are not limited in the modes described above. Due to the development of the banking industry, there are tens of domestic banks. The transaction modes adopted by many banks which have established the online payment service are different. Therefore, the online banking transactions are in chaos, and the online security is low. Because the online banking service is a trend for the service in the future, many banks have configured different transaction modes or is planning to configure different transaction modes, which causes the waste of resources.

### Summary of the Invention

A secure online payment system is provided by the present invention, so that a uniform platform for online payment may be established, and the technical problems such as disordered online transaction process and resource wasting may be resolved.

In order to resolve the above technical problem, the present invention discloses a system for secure online payment, comprising a card holder terminal, a merchant website, an acquiring subsystem and a card issuing subsystem. The system further comprises a routing unit connected with the acquiring subsystem and the card issuing subsystem; wherein:

the routing unit comprises: a storing module, which is adapted to store a transaction mode adopted by each card issuing subsystem and routing information and processing procedure corresponding to a Bank Identification Number (BIN) of each card number; a processing module, which is adapted to determine the transaction mode adopted by the corresponding card issuing subsystem according to the card number received from the acquiring subsystem, and perform processing according to the corresponding processing procedure.

Preferably, the system for secure online payment further comprises a security plug-in unit, which is connected with the acquiring subsystem or is arranged in the acquiring subsystem; the security plug-in unit is adapted to establish a data exchange between the merchant website, card holder terminal and the routing unit: card number information of a card holder is obtained via an interaction with the card holder terminal, and the routing information or corresponding processing procedure is obtained via an interaction with the routing unit.

Preferably, the system for secure online payment further comprises a security authentication and authorization unit, which is connected with the card issuing subsystem or is arranged in the card issuing subsystem; the security authentication and authorization unit at least comprises an authentication subunit and a notification subunit, the authentication subunit is adapted to perform identity authentication on the card holder; the notification is adapted to constitute an online transaction result with an identity authentication result of the card holder and a withholding result from the card issuing subsystem, and transmit the online transaction result to the card holder terminal via Internet. Preferably, the routing unit stores routing information of the security authentication and authorization unit corresponding to each card issuing subsystem that adopts a direct authentication and authorization mode.

Preferably, the system for secure online payment further comprises a card holder security control unit, which is adapted to establish an interaction with the card holder terminal, and receive security information indicating an identity of the card holder that is input by the card holder. The routing unit stores routing information of the card holder security control unit corresponding to each card issuing subsystem adopting a card holder security control unit authentication mode. Preferably, the system for secure online payment further comprises a card holder security interaction unit, the card holder security interaction unit is connected to the card holder security control unit, so as to send authentication information to the card holder via a channel that is agreed on in advance, receive authentication information input by the card holder, and perform authentication on the authentication information.

Preferably, the card holder security control unit, routing unit and the card holder security interaction unit may be arranged on the same server.

Preferably, the security plug-in unit comprises: a merchant authentication unit, which is adapted to perform identity authentication on a merchant who initiates an order transaction request; an interaction control unit, which is adapted to control a data exchange with the merchant website, card holder terminal, routing unit, security authentication and authorization unit and card holder security control unit; data storing unit, which is adapted to store data comprising merchant information; and an authentication and transmission unit, which is adapted to perform security authentication on data packets received and transmitted.

Furthermore, the present invention discloses a routing server, comprising:

a storing unit, which is adapted to store a transaction mode adopted by each card issuing subsystem and routing information and processing procedure corresponding to a Bank Identification Number of each card number;

a processing unit for direct authentication and authorization mode: when the card issuing subsystem corresponding to the card number adopts a direct authentication and authorization mode, routing information of a security authentication and authorization unit corresponding to the card number is returned;

a processing unit for card holder security control unit authentication mode: when the card issuing subsystem corresponding to the card number adopts a card holder security control unit authentication mode, routing information of a card holder security control unit is returned; and

a processing unit for acquiring subsystem self-processing mode: when the card issuing subsystem corresponding to the card number adopts an acquiring subsystem self-processing mode, the corresponding acquiring subsystem is informed of the processing mode.

Furthermore, the present invention provides a method for secure online payment, comprising: obtaining, by an acquiring subsystem, a transaction request and card number information of a card holder; determining, by a routing unit, a transaction mode adopted by a corresponding card issuing subsystem according to the card number, and processing information according to a corresponding processing procedure; and performing, by the acquiring subsystem or the card issuing subsystem, transaction settlement, and returning result information.

Wherein:

If the card issuing subsystem corresponding to the card number adopts an acquiring subsystem self-processing mode, the routing unit notifies the corresponding acquiring subsystem. The acquiring subsystem performs the transaction settlement and returns the result information.

If the card issuing subsystem corresponding to the card number adopts a card holder security control unit authentication mode, the routing unit returns routing information of the card holder security control unit. The card holder security control unit establishes an interaction with a card holder terminal, and receives security information indicating a card holder identity that is input by the card holder. The card issuing subsystem performs authentication and transaction settlement, and returns the result information.

If the card issuing subsystem corresponding to the card number adopts a direct authentication and authorization mode, the routing unit returns routing information of a security authentication and authorization unit corresponding to the card number. The card issuing subsystem performs authentication and transaction settlement, and returns the result information.

Furthermore, the present invention provides another method for secure online payment, comprising:

(1) establishing an interaction between a card holder and a security plug-in unit when a merchant website receives an order information of the card holder, and receiving, by the security plug-in unit, a card number for paying a transaction amount input by the card holder;

(2) forwarding, by the security plug-in unit, the card number and order information to a routing unit; determining, by the routing unit, whether a card holder security control unit authentication mode is adopted according to the card number input by the card holder; if yes, transmitting routing information of a corresponding card holder security control unit to the security plug-in unit; and transmitting, by the security plug-in unit, the card number and card holder information to the card holder security control unit;

(3) establishing, by the card holder security control unit, an interaction with the card holder, receiving security information indicating an identity of the card holder that is input by the card holder, and transmitting the security information to the security plug-in unit;

(4) packaging, by the security plug-in unit, the security information and the order information into a transaction request message, and sending the transaction request message to a corresponding card issuing subsystem via a cross-bank switching center or according to the routing information provided by the routing unit;

(5) performing, by the card issuing subsystem, identity authentication and authorization on the transaction request message as well as the withholding, and returning a processing result.

Preferably, the interaction between the card holder security control unit and the card holder is accomplished through the following steps:

b1: the card holder security control unit transmits the card number to a card holder security interaction unit, the card holder security interaction unit returns a User Interface Requirement to the card holder security control unit;

b2: the card holder security interaction unit sends authentication information to the card holder via a channel that is agreed on in advance;

b3: the card holder security control unit receives input information, and transmits the input information to the card holder security interaction unit;

b4: the card holder security interaction unit performs authentication on the input information, and transmits authenticated information to the card holder security control unit.

Preferably, the security plug-in unit guides the card holder to establish a Security Socket Layer (SSL) security channel for the card holder security control unit to perform authentication; performs authentication on a validity of a card holder certificate and establishes a channel for providing a secure data transmission. When the validity of the certificate is approved, the card holder security control unit shows on a browser on a card holder terminal that the card holder needs to input information, obtains a Distinguish Name (DN) of the certificate and the card number input by the card holder via a Security Socket Layer server module, and verifies whether the certificate and the card number is effectively bound. If they are effectively bound, the information input by the card holder is transmitted to the security plug-in unit. Otherwise, an authentication failed result is transmitted to the security plug-in unit.

Furthermore, the present invention discloses a method for secure online payment, comprising:

(1) submitting, by a card holder terminal, an order to a merchant website;

(2) initiating, by the merchant website, a transaction request to an acquiring subsystem;

(3) establishing, by the acquiring subsystem, an interaction with the card holder terminal, and obtaining card number information input by the card holder;

(4) transmitting, by the acquiring subsystem, the card number information and transaction information to a routing unit;

(5) if a card issuing institution corresponding to the card number adopts a card issuing institution direct authentication and authorization mode, transmitting, by the routing unit, the card number information and the transaction information to a security authentication and authorization unit corresponding to the card issuing institution;

(6) performing, by the security authentication and authorization unit, authentication on the card holder;

(7) when the authentication is passed, performing withholding by the card issuing subsystem;

(8) transmitting, by the card issuing subsystem, a withholding result and an authentication result to the acquiring subsystem;

(9) the acquiring subsystem informing the merchant.

Preferably, between step (5) and step (6), the method further comprises: determining, by the security authentication and authorization unit, whether the card holder is registered, and returning a registration result to the routing unit; allocating, by the routing unit, a unique transaction identification code to present payment, and allocating the registration result and the identification code to the acquiring subsystem; if the registration result is that the card holder is registered, sending, by the acquiring subsystem, the card number information, order information and a service identification code to the security authentication and authorization unit, and requesting to perform authentication on the card holder.

Preferably, transaction result information is transmitted to the acquiring subsystem through following steps:

The card issuing subsystem sends an advice of an online transaction result to a cross-bank switching center. The online transaction result contains a unique transaction identification code. When a response to the online transaction result is not received within a predetermined period of time, the card issuing subsystem resends the advice of the online transaction result for a limited number of times. When receiving the online transaction result, the cross-bank switching center returns a response message, and sends the online transaction result to the corresponding acquiring subsystem. When the response to the online transaction result is not received within a predetermined period of time, the cross-bank switching center resends the advice of the online transaction result to the acquiring subsystem for a limited number of times.

Preferably, the method for secure online payment further comprises:

performing, by the cross-bank switching center, settlement within a predefined period of time according to a transaction identification code, in which the cross-bank switching center collects all the online transaction result advices within the predefined period of time, and sends them to the corresponding acquiring subsystem;

sending, by the acquiring subsystem, the online transaction result advice that was not received to the corresponding merchant website.

Preferably, the transaction result information is sent to the acquiring subsystem through the following steps:

the card issuing subsystem constitutes the online transaction result with the authentication result and the withholding result, and transmits the online transaction result to the card holder terminal via Internet, wherein the online transaction result further comprises the transaction identification code; the card holder terminal transmits the online transaction result to the acquiring subsystem via Internet.

Furthermore, the present invention provides a method for secure online payment, comprising:

(1) submitting, by a card holder terminal, an order to a merchant website;

(2) initiating, by the merchant website, a transaction request to an acquiring subsystem;

(3) establishing, by the acquiring subsystem, an interaction with the card holder terminal, and obtaining card number information input by the card holder;

(4) transmitting, by the acquiring subsystem, the card number information and transaction information to a routing unit;

(5) if a card issuing institution corresponding to the card number adopts a card issuing institution direct authentication and authorization mode, transmitting, by the routing unit, the card number information and the transaction information to a security authentication and authorization unit corresponding to the card issuing institution;

(6) performing, by the security authentication and authorization unit, authentication on the card holder;

(7) when the authentication is passed, performing withholding by the card issuing subsystem, and returning a transaction result;

(8) if the acquiring subsystem does not receive the online transaction result within a predefined period of time, sending, by the acquiring subsystem, a purchase confirmation advice to the card issuing subsystem via a cross-bank switching center or a routing unit;

(9) when receiving the purchase confirmation advice, the card issuing subsystem searches a corresponding database; when it is found that a corresponding withholding is performed, returning acceptance information to the acquiring subsystem.

Compared with the prior art, the present invention has the following advantages:

The present invention provides a platform, so that the banks adopting different transaction modes may perform transaction on this platform. Therefore, the technical problem of disordered online transaction process and resource wasting may be resolved. Meanwhile, according to the present invention, a security plug-in unit is arranged in the acquiring institution, so as to implement interaction with the card holder and obtain card number information. Therefore, security is provided.

The present invention provides a realizable system and method for secure online payment, in which the authentication process and the withholding process is combined into one payment process. Thus, the processing speed of the payment is increased, and the utilization rate of the online resources is improved. Most important is that the card issuing institution forwards the transaction result to the acquiring institution via the switching center actively, and existing dedicated network is used. Therefore, less time is consumed, and abnormal condition is reduced, so that the case of single side account may be effectively reduced, and the transaction success rate is improved. Furthermore, according to the invention, the information provided to the card holder and the merchant is whether the transaction is successful, but not whether the authentication is passed. The transaction success information obtained by the merchant from the acquiring institution may be used as the basis for product delivery. Furthermore, with the method according to the invention, the card issuing institution is able to send the information of whether the transaction is successful to the merchant, so that the realizability of the online transaction is improved.

According to the invention, a uniform online security control subsystem may be arranged, so that it is possible to provide a uniform transaction interface for the user. For the card issuing institution, no matter what the structure of the card issuing subsystem is, the banks participating in the cross-bank switching subsystem are able to use this method to implement online payment for each transaction, so the scope of application of the present invention is enlarged. Furthermore, according to the invention, an interaction with the card holder is established directly via API (a security plug-in unit) to obtain the card number information. So it is avoided that good and bad merchants may obtain the card number of the card holder, and the security of online payment is further enhanced.

### Brief Description of the Drawings

Figure 1 is a schematic diagram showing the structure of an online payment system in the prior art;

Figure 2 is a schematic diagram showing the structure of another online payment system in the prior art;

Figure 3 is a schematic diagram showing the structure of still another online payment system provided by the VISA Company;

Figure 4 is a schematic diagram showing the architecture of the secure online payment system according to the invention;

Figure 5 is a flow chart of a method of secure online payment according to the invention;

Figure 6 is a flow chart of another method of secure online payment according to the invention;

Figure 7 is a schematic diagram showing the architecture of an online payment system improved based on the present online payment system provided by the VISA Company;

Figure 8 is a schematic diagram showing the architecture of the improved secure online payment system based on the banking system provided by the UnionPay;

Figure 9 is a schematic diagram showing the process of the method for secure online payment according to the invention;

Figure 10 is a schematic diagram showing an example of the process of the method for secure online payment according to the invention;

Figure 11 is a schematic diagram showing another secure online payment process according to the invention.

### Detailed Description of the Embodiments

Hereinafter, the invention will be described in conjunction with the drawings.

According to the invention, a platform is provided based on various present transaction modes, so that all of the present transaction modes are able to run on the secure payment platform provided by the invention. At present, there are mainly three transaction modes, i.e., acquiring institution self-processing mode, network banking center authentication mode (card holder security control unit authentication mode) and card issuing institution direct authentication and authorization mode. Certainly, with the development of the electronic transaction, more and more transaction modes may come forth. With the secure payment system provided by the invention, the above three transaction modes and other transaction modes that may come forth in the future are all able to run on this platform.

Please refer to Figure 4, which is a schematic diagram showing the architecture of the secure online payment system according to the invention. The secure online payment system according to the invention is able to provide three transaction modes, i.e., the acquiring institution self-processing mode, network banking center authentication mode (card holder security control unit authentication mode) and card issuing institution direct authentication and authorization mode. This secure online payment system includes a card holder terminal 21, a merchant website 22, an acquiring subsystem 23, a cross-bank switching system 24, a card issuing subsystem 26, a routing unit 25, an online security control subsystem and a security authentication and authorization unit 30.

The card holder terminal 21 is connected with the merchant website 22, and is adapted to establish a connection between the card holder and the merchant. They are usually connected with each other via Internet. For example, the card holder terminal opens an Internet browser and logs on the merchant website, chooses a commercial product and submits the order.

The merchant website 22 is connected to the acquiring institution.

The cross-bank switching system 24 is connected with each card issuing subsystem 26 and acquiring subsystem 23 via dedicated lines, in order to establish a connection between the card issuing institution and the acquiring institution. The cross-bank switching system 24 can perform accounting with the acquiring institution and the card issuing institution for each transaction. The cross-bank transaction system of UnionPay may be adopted as cross-bank switching center 24.

The security authentication and authorization unit 30 is arranged in each card issuing institution. The security authentication and authorization unit 30 at least includes an authentication subunit to perform identity authentication for the card holder and an advice subunit. The advice subunit forms an online transaction result from the result of the identity authentication performed for the card holder by the security authentication and authorization unit and the result of the withholding in the card issuing subsystem, and sends the online transaction result to the card holder terminal via Internet.

The routing unit 25 stores the transaction modes adopted by different card issuing institutions as well as the routing information and processing procedure corresponding to each BIN, so as to determine the transaction mode adopted by the corresponding card issuing institution according to the card number received, and perform processing according to the processing procedure.

The card issuing subsystem 26 is adapted to perform withholding according to the order.

The online security control subsystem is adapted to establish an interaction with the card holder and receive the security information which is input by the card holder and indicates the identity of the card holder.

The routing unit 25 stores the corresponding relation between the BIN code of the card number and the card issuing institution, the transaction mode adopted by each card issuing institution as well as the routing information or processing procedure corresponding to the card issuing institution. When the card issuing institution corresponding to the card number adopts the direct authentication and authorization mode, the corresponding relation between the BIN and the routing information of the security authentication and authorization unit 30 is saved. When the card issuing institution adopts the acquiring institution self-processing mode, an indication of acquiring institution self-processing is returned. When the card issuing institution corresponding to the card number adopts the card holder security control unit authentication mode, the routing information of the card holder security control unit is returned. The routing unit 25 may perform programming and configuration according to the specific transaction mode that is supported. The routing unit 25 is usually provided by a cooperative institution, and may be a service subsystem or server which has the routing function.

The online security control subsystem includes a card holder security control unit 27, which is adapted to receive the security information indicating the identity of the card holder. The security information indicating the identity of the card holder includes card number and the corresponding pass word. The security of such security information is directly associated with the security of the whole online payment service. In the prior art, the reception of the security information indicating the identity of the card holder that is input by the card holder is performed by the merchant website. Because the validity of the merchant website cannot be determined, and the security thereof is not sufficient, the security of the whole online payment service is relatively low. If the security information indicating the identity of the card holder that is input by the card holder, such as the card number and the corresponding password, is put in the card issuing subsystem 26, because a card holder security authentication unit, which is adapted to receive the security information input by the card holder, should be arranged in each card issuing subsystem 26, it is difficult to implement and may result in a high cost. According to the invention, an online security control subsystem may be arranged, which is adapted to resolve an issue that is concerned by all the card issuing institutions, i.e., establishing an interactive interface and safely receiving the security information input by the card holder. For example, the applicant, China UnionPay, establishes an online security authentication subsystem, and all the card issuing institutions may utilize this online security authentication subsystem to obtain the security information input by the card holder, so that the security of the whole online payment process is greatly enhanced. Furthermore, on the card issuing institution end, it is not required to establish a card holder security authentication unit respectfully. Thereby, large amount of repeated investment may be avoided.

In order to improve the security of the online payment, a card holder security interaction unit 28 may be arranged in the existing online security control subsystem according to the invention. The card holder security interaction unit 28 is connected to the card holder security control unit 27, so as to receive the password information input by the card holder via the card holder security control unit 27 and perform authentication for the information, after transmitting the password information of the online payment to the card holder through a channel that is agreed on.

In other words, when the card holder interacts with the card holder security control unit 27, the card holder security control unit 27 sends the card number to the card holder security interaction unit 28 first, and the card holder security interaction unit 28 sends a dynamic password to the card holder through a channel that is agreed on in advance. When receiving the dynamic password, the card holder inputs the dynamic password to the input interface provided by the card holder security control unit 27, and the card holder security control unit 27 sends the input information to the card holder security interaction unit 28 for authentication. For example, it is determined whether the dynamic password in the input information is the same as the password that is sent to the card holder through other channel. If yes, the authentication is passed; otherwise, the authentication is failed. Certainly, the number of times for input may be configured in consideration of the case that the user may input a wrong password by accident. In order to ensure the reliability of the authentication, a period of validity may be configured for the dynamic password.

The card holder terminal 21 is connected to the merchant website 22 via Internet, and many merchant websites 22 are connected to an acquiring subsystem 23 via Internet or dedicated lines. In order to ensure the security of the acquiring subsystem 23, a corresponding security plug-in unit 29 is configured for each acquiring institution according to the invention. The security plug-in unit 29 may connect with the corresponding acquiring subsystem 23 directly, or may be arranged in the acquiring subsystem 23 directly. Furthermore, a direct interaction with the card holder terminal 21 may be established via the security plug-in unit 29. The acquiring subsystem 23 is connected to the cross-bank switching center 24 via a dedicated line, and the security plug-in unit 29 may be connected to the routing unit 25 via a dedicated line or Internet. Each card issuing subsystem 26 is connected to the cross-bank switching center 24 via a dedicated line. When the card issuing institution adopts the card issuing institution direct authentication and authorization mode, a security authentication and authorization unit 30 is arranged in each card issuing institution correspondingly. The security authentication and authorization unit 30 may be developed by the card issuing institution directly, or may be developed by other companies under the commission of the card issuing institution. The security authentication and authorization unit 30 is arranged outside of the card issuing subsystem 26 and connected with the card issuing subsystem 26 directly. The security authentication and authorization unit 30 corresponding to each card issuing institution may be connected to the routing unit 25 via a dedicated line or Internet. The individual security plug-in unit 29, routing unit 25 and security authentication and authorization unit 30 may be a knot on Internet, and are connected to each card holder terminal 21 via Internet directly.

The security plug-in unit 29 may be a programmed server, or may be implemented by programming on the application server in the original acquiring subsystem. The security plug-in unit may include the following units:

Merchant authentication unit, which is adapted to perform identity authentication on the merchant who initiates an order transaction request. When a subordinate merchant of an acquiring institution is registered, merchant information of this merchant is stored in a data storing unit. Each merchant possesses a unique merchant identity, such as merchant name or the IP number corresponding to the merchant website. When a merchant initiates an order transaction request, the merchant authentication unit perform identity authentication on the merchant according to the merchant information in the data storing unit.

Interaction control unit, which is adapted to control the data exchange with the merchant website, card holder terminal, routing unit, card holder security control unit and the security authentication and authorization unit 30. The interaction control unit saves the routing information of these interaction objects (merchant website, card holder terminal, routing unit, and security authentication and authorization unit) as well as the interaction triggering process. For example, when the identity authentication on the merchant is passed, the routing information of the card holder terminal is obtained from the transaction request sent by the merchant, and an interaction with the card holder is established, so as to obtain the card number information of the card holder. The card number information of the card holder and the present transaction information are sent to the routing unit, so as to obtain the authentication type of the transaction and the routing information of the corresponding security authentication and authorization unit as well as the transaction identity code. When the result of the transaction is received, it is returned to the merchant website, and so on.

Data storing unit, which is adapted to store data, i.e., store merchant information and necessary data for the security plug-in unit 29 during the transaction, such as the transaction identity code of each transaction.

Authentication and transmission unit, which is adapted to perform security authentication on the data packets received and transmitted. Each time when performing the data exchange with other devices, a strict security control should be performed. For example, before submitting a transaction to the receiving party, the transmitting party performs an identity authentication on both parties with a digital certificate first. When the authentication is passed, a symmetric key for encrypting the transaction data is negotiated. The transmitting party uses the symmetric key to encrypt the transaction data and send the encrypted transaction data to the receiving party. The receiving party decrypts the data with the symmetric key, encrypts response data with the symmetric key and returns the encrypted response data. The security plug-in unit 29 may be adopted as the transmitting party, or may as the receiving party. The authentication and transmission unit is mainly in charge of the security control during the data exchange.

When receiving an authentication successful message, the card holder security control unit 27 transmits the security information input by the user, such as password, to the security plug-in unit 29. When receiving the authentication failed message, the card holder security control unit 27 may send the authentication failed message to the security plug-in unit 29 directly, and then the security plug-in unit 29 may perform the subsequent process, such as returning a message to the merchant that the identity of the user needs to be further confirmed.

The internal structure of a preferred security plug-in unit 29 is described above. It may be readily occurred to those skilled in the art that other feasible ways may be adopted for implementation, as long as the corresponding function can be accomplished. The merchant authentication unit and the authentication and transmission unit contained in the above preferred security plug-in unit 29 may be used to enhance and ensure the security in the data transmission.

Generally, the security plug-in unit 29 may be arranged in the acquiring subsystem developed by the acquiring institution, and the card holder security control unit 27, routing unit 25 and card holder security interaction unit 28 may be arranged on a server.

According to the invention, a routing server is constructed according to the transaction modes that are configured by the bank at present, which includes:

a storing unit, which is adapted to store the transaction mode adopted by each card issuing subsystem and the routing information and processing procedure corresponding to the BIN of each card number;

a processing unit for direct authentication and authorization mode: when the card issuing subsystem corresponding to the card number adopts the direct authentication and authorization mode, the routing information of the security authentication and authorization unit corresponding to the card number is returned;

a processing unit for card holder security control unit authentication mode: when the card issuing subsystem corresponding to the card number adopts the card holder security control unit authentication mode, the routing information of the card holder security control unit is returned;

a processing unit for acquiring subsystem self-processing mode: when the card issuing subsystem corresponding to the card number adopts the acquiring subsystem self-processing mode, the corresponding acquiring subsystem is informed of the processing mode.

When the above routing server is connected with the acquiring subsystem and the card issuing subsystem, the requirements of the transaction processing of different banks may be fulfilled, and the convenience of performing a secure online payment with the bank card may be increased for the user.

Hereinafter, the process of the secure payment will be illustrated based on the secure payment system according to the invention.

(1) A card holder terminal submits an order to a merchant website;

(2) The merchant website initiates a transaction request to a security plug-in unit;

(3) The security plug-in unit establishes an interaction with the card holder terminal, and obtains card number information input by the card holder;

(4) The security plug-in unit transmits the card number information and the transaction information to a routing unit, the routing unit determines the transaction mode adopted by the card issuing institution according to the card number. If the acquiring institution self-processing mode is adopted, process A is performed; if the card holder security control unit authentication mode is adopted, process B is performed; if the card issuing institution direct authentication and authorization mode is adopted, process C is performed.

Process A:

A1: When it is determined by the routing unit with the card number that the transaction is in the acquiring institution self-processing mode, the routing unit notifies the security plug-in unit;

A2: The security plug-in unit transmits the card number and the order information to the acquiring subsystem;

A3: The acquiring subsystem performs the subsequent process by itself, i.e., performing authentication and authorization as well as withholding, and informing the card holder and the merchant.

Process B:

B1: The routing unit determines whether the card holder security control unit authentication mode is adopted according to the card number input by the card holder. If yes, the routing information of the corresponding card holder security control unit is transmitted to the security plug-in unit;

B2: The security plug-in unit transmits the card number information to the card holder security control unit first;

B3: The security plug-in unit transmits the card number information and the card holder information to the card holder security control unit; the card holder security control unit transmits the card number to a card holder security interaction unit, the card holder security interaction unit returns a User Interface Requirement to the card holder security control unit; the card holder security interaction unit sends authentication information to the card holder via a channel that is agreed on in advance; the card holder security control unit receives the input information, and transmits the input information to the card holder security interaction unit; the card holder security interaction unit performs authentication on the input information, and transmits the authentication information to the card holder security control unit;

B4: the security plug-in unit puts the security information and the order information into a transaction request message, and sends the message to the corresponding card issuing subsystem via the cross bank transaction subsystem;

B5: the cross bank transaction subsystem performs identity authentication and authorization as well as the withholding for the transaction request message, and returns a processing result.

Process C:

C1: If the card issuing institution corresponding to the card number adopts the card issuing institution direct authentication and authorization mode, the routing unit transmits the card number information and the transaction information to the security authentication and authorization unit corresponding to the card issuing institution;

C2: The security authentication and authorization unit performs the authentication on the card holder;

C3: When the authentication is passed, the card issuing subsystem performs withholding;

C4: If the acquiring subsystem does not receive the online transaction result within a predefined period of time, it sends a purchase confirmation advice to the cross-bank switching center. Wherein the online transaction result is transmitted by the security authentication and authorization unit to the card holder terminal via Internet, and then transmitted by the card holder terminal to the acquiring subsystem;

C5: When receiving the purchase confirmation advice from the cross-bank switching center, the card issuing subsystem searches the corresponding database. When it is found that the corresponding withholding is performed, the acceptance information is returned to the acquiring subsystem, so as to inform the merchant.

Following step may be adopted as a substitute for steps C4-C5: the card issuing subsystem transmits the withholding result and the authentication result to the acquiring subsystem via the cross-bank switching center.

(5) The acquiring subsystem informs the merchant.

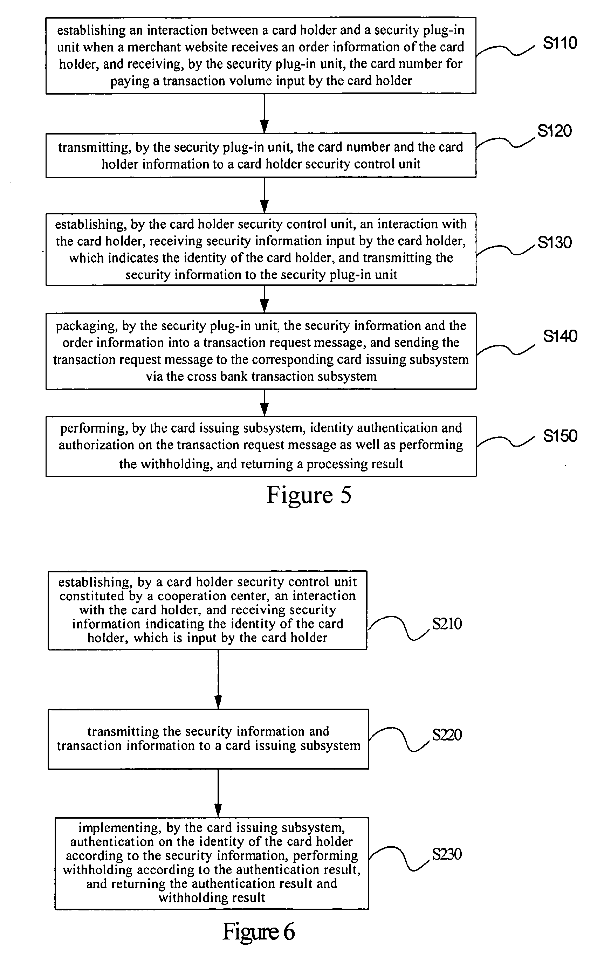

Based on the above online security authentication system, there is provided an authentication method according to the invention. Please refer to Figure 5, which is a flow chart of an authentication method according to the invention. This method includes:

S110: establishing an interaction between a card holder and a security plug-in unit when a merchant website receives an order information of the card holder, and receiving, by the security plug-in unit, the card number for paying a transaction amount input by the card holder;

The card holder logs on the merchant website via an Internet Browser installed on the personal terminal, chooses a commercial product, and confirms and submits the order; the merchant website forwards the card holder web page to the security plug-in unit, and transmits the order information to the security plug-in unit. The card holder establishes an interaction with the card holder according to the card holder web page, and receives the card number information input by the card holder.

S120: transmitting, by the security plug-in unit, the card number and the card holder information to a card holder security control unit;

S130: establishing, by the card holder security control unit, an interaction with the card holder, receiving security information input by the card holder, which indicates the identity of the card holder, and transmitting the security information to the security plug-in unit;

S 140: packaging, by the security plug-in unit, the security information and the order information into a transaction request message, and sending the transaction request message to the corresponding card issuing subsystem via the cross bank transaction subsystem;

S150: performing, by the card issuing subsystem, identity authentication and authorization on the transaction request message as well as the withholding, and returning a processing result.

The above is a security payment method provided by the invention, in which the security information indicating the identity of the card holder himself, which is input by the user, is received by the card holder security control unit, and then the security information and the order is transmitted to the card issuing institution (generally it is a bank) via the cross bank transaction subsystem for authentication and authorization as well as withholding. All the card issuing institutions adopting the online security control subsystem for authentication may securely obtain the secure information of the card holder with the above method, and no card holder security authentication unit needs to be established in the card issuing subsystem. The online security control subsystem is able to provide a customized service, i.e., a corresponding user interface may be constituted according to the requirements of different card issuing institutions, and the corresponding information input by the card holder may be transmitted to the corresponding card issuing institution. Furthermore, the online security control subsystem may also provide a uniform user interface, so it is convenient for the card holder to input.

However, if all the transactions are to be processed by the card holder security control unit regardless of the consequences, large processing load may be brought to the card holder security control unit. Therefore, between the steps S110 and S 120, there exist also following steps:

a1: The security plug-in unit transmits the card number and the order information to the routing unit, and queries the routing information;

a2: The routing unit determines whether the card holder security control unit authentication mode is adopted according to the card number input by the card holder. If yes, the routing information of the corresponding card holder security control unit is transmitted to the security plug-in unit; otherwise, information of this authentication mode or other authentication mode not being supported by the card number is returned to the security plug-in unit;

a3: The security plug-in unit transmits the card number information to the card holder security control unit first, and queries whether the card holder needs to participate in the interaction with the card holder security control unit;

a4: The card holder security control unit returns a query result;

a5: When the query result received by the security plug-in unit is "yes", step S 120 is performed.

Step S130 may further include: b1: the card holder security control unit transmits the card number to a card holder security interaction unit, and the card holder security interaction unit returns a User Interface Requirement to the card holder security control unit; b2: the card holder security interaction unit transmits the authentication information to the card holder via a channel that is agreed on in advance; b3: the card holder security control unit receives the input information, and transmits the input information to the card holder security interaction unit; b4: the card holder security interaction unit performs authentication on the input information, and transmits the authentication information to the card holder security control unit. With the above steps, the identity authentication is performed on the card holder of the online payment in advance. Thereby, the security of the online transaction may be enhanced.

In order to enhance the security, the security plug-in unit may also perform merchant authentication, i.e., the authentication on the merchant identity and the merchant rights, with the merchant database of the acquiring subsystem.

Furthermore, the security plug-in unit guides the card holder to establish an SSL security channel with the card holder security control unit, performs authentication on the validity of the card holder certificate and establishes a channel for providing a secure data transmission.

When the validity of the certificate is approved, the card holder security control unit shows on the browser on the card holder terminal that the card holder needs to input information, obtains the DN of the certificate and the card number input by the card holder via an SSL server module, and verifies whether the certificate and the card number is effectively bound. If they are effectively bound, the information input by the card holder is transmitted to the security plug-in unit; otherwise, an authentication failed result is transmitted to the security plug-in unit.

Please refer to Figure 6, a method for online secure payment is provided by the invention, which includes:

S210: establishing, by a card holder security control unit constituted by a cooperation institution, an interaction with the card holder, and receiving security information indicating the identity of the card holder, which is input by the card holder;

S220: transmitting the security information and transaction information to a card issuing subsystem;

S230: implementing, by the card issuing subsystem, authentication on the identity of the card holder according to the security information, performing withholding according to the authentication result, and returning the authentication result and withholding result.

With the above method, the authentication process and the withholding process are combined into one payment process. Therefore, the processing speed for the payment is increased, and the utilization rate of the resources online is improved. The card holder security control units provided by the cooperation institution collect information from different card issuing institutions, and they can also perform authentication on the digital certificate.

Hereinafter, the case in which modification is made on the basis of the online payment system provided by the VISA Company and the case in which modification is made on the basis of the banking system provided by UnionPay are taken as examples, in order to illustrate the online payment process according to the invention.

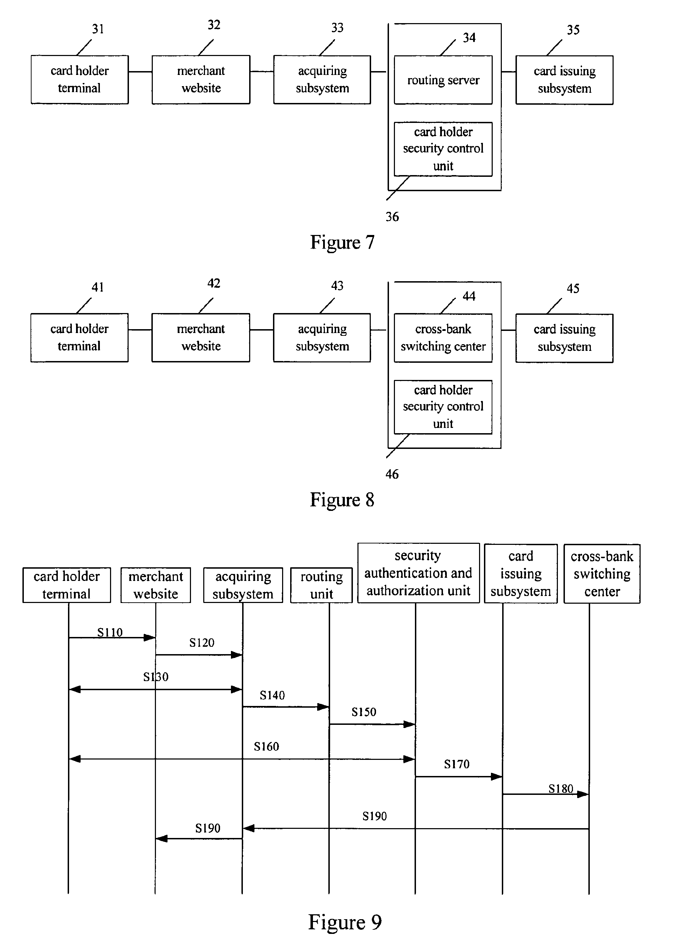

Please refer to Figure 7, which is a schematic diagram showing the architecture of an online payment system improved based on the present online payment system provided by the VISA Company. This system includes a card holder terminal 31, a merchant website 32, an acquiring subsystem 33, a routing server 34, a card issuing subsystem 35 and a card holder security control unit 36. The card holder terminal 31, merchant website 32, acquiring subsystem 33, routing server 34, card issuing subsystem 35 and card holder security control unit 36 may be nodes on Internet, which performs data communication via Internet. The card holder security control unit 36 may be developed by the cooperative institution such as VISA, which is used for establishing an interaction with the card holder to obtain security information, and for establishing an interaction with the merchant website 32 or acquiring subsystem 33, and performing certificate authentication.

First, the card holder terminal 31 initiates a transaction request to the merchant website 32. The transaction request at least contains information of the commercial product that is to be purchased and the corresponding rate as well as the card holder terminal information etc.

Then, the merchant website 32 transmits information, such as the IP address of the card holder terminal 31, to the card holder security control unit 36.

Then, the card holder security control unit 36 establish an interaction with the card holder, obtains the security information, and performs the certificate authentication.

Then, the card holder security control unit 36 may return the certificate authentication result and the security information to the merchant website, or may return the certificate authentication result and the security information to the acquiring subsystem 33 in consideration of the security.

Then, the merchant website 32 transmits the security information and transaction information to the routing server 34, so as to transmit to the corresponding card issuing subsystem 35. Alternatively, in consideration of the security, the merchant website 32 may transmit the transaction information to the acquiring subsystem 33, the acquiring subsystem 33 transmits the security information and the transaction information to the routing server 34, and the routing server 34 transmits them to the corresponding card issuing subsystem 35.

Finally, the card issuing subsystem 35 performs authentication and withholding, and returns the result, so that the merchant website 32 and the card holder terminal 31 may obtain the authentication result and the withholding result.

An improved secure online payment system based on the existing banking system provided by the UnionPay will now be illustrated. Please refer to Figure 8, which is a schematic diagram showing the architecture of the improved secure online payment system based on the banking system provided by the UnionPay. This system includes a card holder terminal 41, a merchant website 42, an acquiring subsystem 43, a cross-bank switching center 44, a card issuing subsystem 45 and a card holder security control unit 46. The card holder security control unit 36 may be developed by the cooperative institution such as UnionPay, which is used for establishing an interaction with the card holder to obtain security information, and for establishing an interaction with the merchant website 42 or acquiring subsystem 43, and performing certificate authentication.

First, the card holder terminal 41 initiates a transaction request to the merchant website 42. The transaction request at least contains information of the commercial product that is to be purchased and the corresponding rate as well as the card holder terminal information etc.

Then, the merchant website 42 transmits information, such as the IP address of the card holder terminal 41, to the card holder security control unit 46 via the acquiring subsystem 43.

The card holder security control unit 46 establishes an interaction with the card holder, obtains security information, and returns the security information to the acquiring subsystem. The acquiring subsystem transmits the security information and the transaction information to the cross-bank switching center. The cross-bank switching center transmits the security information and the transaction information to the corresponding card issuing subsystem. The card issuing subsystem performs the corresponding identity authentication and withholding, and returns the authentication result and the withholding result.

In order to achieve a better authentication effect, the above disclosed online security authentication subsystem may be used to substitute the card holder security control unit. All the card issuing institutions may utilize this online security authentication subsystem to obtain the security information input by the card holder, so that the security of the whole online payment process is greatly enhanced. Furthermore, on the card issuing institution end, it is not required to establish a card holder security authentication unit respectfully. Thereby, large amount of repeated investment may be saved.

Based on the above disclosed system for secure online payment, there is further provided a method for secure online payment. Please refer to Figure 9, which is a flow chart of the method for secure online payment. The method includes the following steps:

S 110: A card holder terminal submits an order to a merchant website;

S120: The merchant website initiates a transaction request to an acquiring subsystem;

S 130: The acquiring subsystem establishes an interaction with the card holder terminal, and obtains card number information input by the card holder;

S140: The acquiring subsystem transmits the card number information and the transaction information to a routing unit;

S 150: If the card issuing institution corresponding to the card number adopts the card issuing institution direct authentication and authorization mode, the routing unit transmits the card number information and the transaction information to the security authentication and authorization unit corresponding to the card issuing institution;

S160: The security authentication and authorization unit performs authentication on the card holder;

S170: When the authentication is passed, the card issuing subsystem performs withholding;

S180: The card issuing subsystem transmits the withholding result and the authentication result to the acquiring subsystem via the cross-bank switching center;

S 190: The security plug-in unit of the acquiring subsystem informs the merchant.

Through the above steps, a realizable online payment mode is provided. Furthermore, for the card holder, not only the authentication information about whether the identity authentication is successful, but also the result of whether the transaction is successful may be obtained. Most important is that in the invention, by utilizing the security and shortcut function in the existing financial system, the online payment mode provided by the invention also possesses the security and shortcut function.

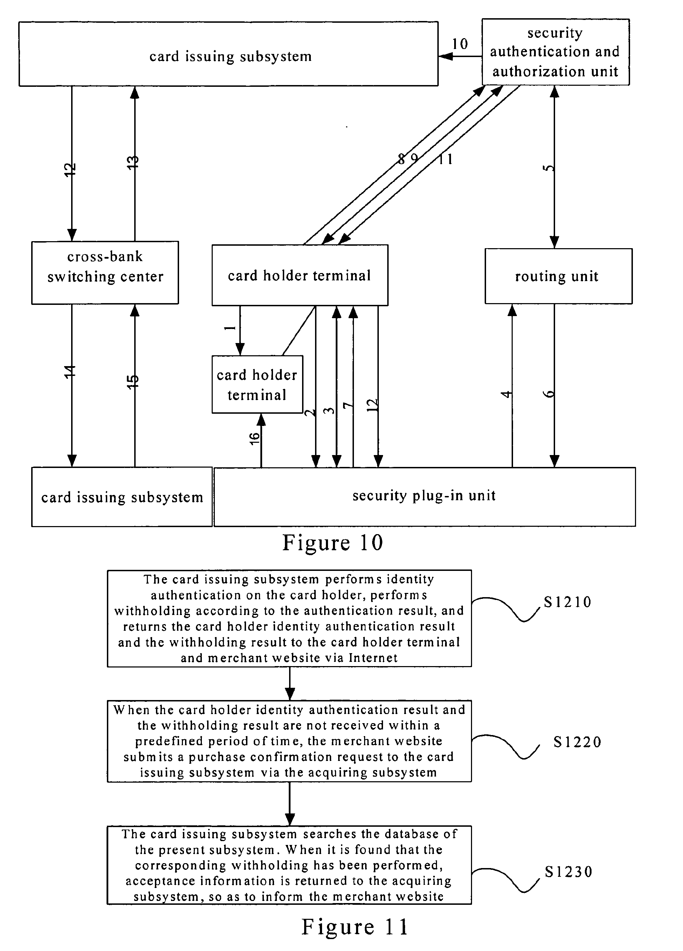

Please refer to Figure 10, which is a specific flow chart showing the process of the method for secure online payment according to the invention, which includes the following steps:

1- A card holder terminal is connected to a merchant website via Internet. The card holder chooses a commercial product, confirms and submits an order;

2- The merchant website forwards the card holder web page to a security plug-in unit, and transmits the order information and transaction information to the security plug-in unit;

3- The security plug-in unit shows the page to the card holder, the card holder inputs the card number and clicks to submit the card number;

4- The security plug-in unit transmits the information such as the card number and the transaction type to a routing unit to query routing information;

5- The routing unit determines that the present transaction uses the card issuing institution direct authentication and authorization mode according to the card number input by the card holder, generates a unique transaction identifier ID (transaction identification code), and transmits the information including the card number, transaction type, unique transaction identifier ID to the corresponding security authentication and authorization unit. The security authentication and authorization unit queries whether the card holder is registered, and returns the query result;

6- The routing unit transmits the card holder registration result returned by the security authentication and authorization unit and the unique transaction identifier ID to the corresponding security plug-in unit. If the result returned by the security authentication and authorization unit is that the card holder is not registered, the process ends;

7- The security plug-in unit transmits the information including the card number of the card holder, order sheet, merchant information, unique transaction identifier ID etc. to the security authentication and authorization unit via the browser of the card holder, so that the security authentication and authorization unit may perform authentication on the card holder;

8- The security authentication and authorization unit receives the relevant information;

9- The security authentication and authorization unit establishes a connection with the card holder terminal, orients itself to the card holder, requests the card holder to input relevant information, and performs authentication on the card holder;

10- The security authentication and authorization unit transmits the transaction information (including the unique transaction identifier ID) to the card issuing subsystem corresponding to this security authentication and authorization unit, and the card issuing subsystem performs withholding;

11- The security authentication and authorization unit informs the card holder of the authentication result and transaction result via Internet;

12- The card issuing subsystem transmits the transaction result, such as whether the withholding is performed, to the cross-bank switching center in the form of purchase confirmation advice;

The card issuing subsystem may obtain sufficient information from Secure Authentication & Authorization institution (SAA) to constitute the advice message. Meanwhile, a store-forward-and-resend mechanism is adopted for the advice. If a response to the advice is not received within a limited number of times, the card issuing subsystem should resend the advice. The numerical order of the resent advice and the unique transaction identifier ID are the same as that in the previous advice, which will be introduced in detail hereinafter.

13- The cross-bank switching center gives a response;

14- The cross-bank switching center forwards the advice to the acquiring subsystem;

15- The acquiring subsystem gives a response;

16- The acquiring subsystem notifies the merchant when receiving the transaction result.

Following is an illustration of the process of the transaction routing.

The card issuing subsystem sends an advice of the online transaction result to the cross-bank switching center; the online transaction result contains a unique transaction identification code. When the response to the online transaction result is not received within a predetermined period of time, the card issuing subsystem resends the advice of the online transaction result for a limited number of times.

When receiving the online transaction result, the cross-bank switching center returns a response message, and sends the online transaction result to the corresponding acquiring subsystem. When the response to the online transaction result is not received within a predetermined period of time, the cross-bank switching center resends the advice of the online transaction result to the acquiring subsystem for a limited number of times.

For example:

when the card issuing subsystem sends the advice of the online transaction result to the cross-bank switching center, a unique transaction identifier ID generated by the routing unit is carried in the message, so that the acquiring institution may determine this transaction via the card number, merchant code and unique transaction identifier ID, and further inform the merchant of the transaction result.

When the response to the advice transaction is not received within a predetermined period of time, the card issuing subsystem may initiate the online transaction result advice transaction repeatedly, but the numerical order and the unique transaction identifier ID remain unchanged.

When the cross-bank switching center receives the online transaction result advice transaction, if the transaction is recognized to be a repeated advice transaction, it is indicated in the response sent to the card issuing institution that the advice is repeated. The switching system forwards the online transaction result advice transaction to the acquiring institution. If no response is received, the online transaction result advice transaction is resent repeatedly within a predefined number of times, until the response is received.

A store-and-forward mechanism is adopted on the initiating party for the online transaction result advice transaction, so as to ensure that the online transaction result advice transaction can be received by the receiving party correctly. The advice transaction is initiated via a dedicated network of the cross-bank switching center, so that the transaction result may be received by the acquiring institution correctly and in time, and the situation of single side account may be reduced effectively.

The online transaction result advice transaction is initiated by the card issuing institution, and received by the acquiring institution. However, similar to a purchase transaction, there exist subsequent transactions such as cancellation. The initiating party and receiving party of the subsequent transactions are the same as that in the traditional transaction.

The subsequent transactions such as cancellation should match the online transaction result advice transaction.

Illustration of settlement

The cross-bank switching center performs settlement within a predefined period of time, in which the cross-bank switching center collects all the online transaction result advices within the predefined period of time, and sends them to the corresponding acquiring subsystem. The acquiring subsystem sends the online transaction result advice that was not received to the corresponding merchant website.

For example:

The cross-bank switching center performs settlement according to the online transaction result advice transaction.

If the cross-bank switching center has received an online transaction result advice, but is unable to forward the advice to the acquiring institution, this online transaction result advice transaction is also involved in the settlement.

Because the store-and-forward mechanism is adopted, the online transaction result advice transaction may be initiated repeatedly, but can be involved in the settlement only once.

If the acquiring institution has not received the online transaction result advice transaction, when the day is passed, the cross-bank switching center performs settlement according to the advice transaction. The cross-bank switching center summarizes all the advice transactions of this day into a file, and sends the file to the acquiring institution. The acquiring institution searches for the transaction for which no advice was received according to the file, and sends an advice to the merchant again.

Illustration of error handling:

The online transaction result advice transaction is initiated by a card issuing institution, and received by an acquiring institution via a switching system. The process of error handling of the online transaction result advice transaction is the same as that of the existing purchase result advice. Due to the specificity of the online transaction, during the retrieval request, the note may be a consignment note of the merchant, or may be a receiving note of the card holder. The acquiring institution is responsible for obtaining relevant notes and providing the notes to the card issuing institution, so as to help the card issuing institution to determine whether the merchant has delivered the product. When a charge-back is initiated by the card issuing institution for the online transaction result advice transaction, the reason for the charge-back is allowed to be that the merchant has not delivered the product, but is not allowed to be the problem such as card holder authentication.

The present invention provides a method for secure online payment, which includes: performing, by the card issuing subsystem, identity authentication on the card holder; performing withholding according to the authentication result; and returning the result of the identity authentication on the card holder and the withholding to the merchant website via the acquiring subsystem.

For example, when the system for secure online payment provided by the VISA Company is adopted to perform secure online payment, the payment process is as follows: First, a card holder logs on a merchant website, chooses a commercial product, and confirms and submits an order. Then, the merchant website sends the card holder information to a routing server. After that, the routing server finds the corresponding card issuing institution according to the card number, and returns the routing information of the card issuing subsystem to the merchant website. Then, the merchant website sends the card holder information and the withholding information to the card issuing subsystem. The card issuing subsystem performs authentication on the identity of the card holder, performs withholding according to the authentication result, and returns the withholding result and the authentication result to the card holder terminal and merchant website via Internet. Meanwhile, the card issuing subsystem obtains the routing information of the acquiring subsystem via the routing server, and returns the withholding result and the authentication result to the acquiring subsystem, so as to inform the merchant via the acquiring subsystem. A transaction code may be configured for each transaction by the card issuing subsystem, and the acquiring subsystem and the merchant website may determine whether the withholding result and the authentication result returned for this transaction is received according to the transaction code.

When an existing payment system including a cross-bank switching center is adopted, the payment process is as follows: First, a card holder logs on a merchant website, chooses a commercial product, and confirms and submits an order. Then, the merchant website is connected to a acquiring subsystem, obtains the routing information of a card issuing subsystem via a routing unit, and sends the card holder information and transaction information to the card issuing subsystem. The card issuing subsystem establishes an interaction with the card holder, performs identity authentication on the card holder, and performs withholding according to the authentication result. After that, the card issuing subsystem sends the result of the identity authentication on the card holder and the withholding result to the acquiring subsystem via the cross-bank switching center, so as to notify the merchant. A transaction code may be configured for each transaction by the routing unit, and the acquiring subsystem and the merchant website may determine whether the withholding result and the authentication result returned for this transaction is received according to the transaction code.

The present invention further provides a method for secure online payment. Please refer to Figure 9 again, which may also be a flow chart of the method for secure online payment according to this embodiment. The method includes the following steps:

S 110: A card holder terminal submits an order to a merchant website;

S120: The merchant website initiates a transaction request to an acquiring subsystem;

S 130: The acquiring subsystem establishes an interaction with the card holder terminal, and obtains card number information input by the card holder;

S140: The acquiring subsystem transmits the card number information and the transaction information to a routing unit;

S 150: If the card issuing institution corresponding to the card number adopts the card issuing institution direct authentication and authorization mode, the routing unit transmits the card number information and the transaction information to the security authentication and authorization unit corresponding to the card issuing institution;

S160: The security authentication and authorization unit performs authentication on the card holder;

S170: When the authentication is passed, the card issuing subsystem performs withholding;

S 180: If the acquiring subsystem does not receive the online transaction result within a predefined period of time, it sends a purchase confirmation advice to the cross-bank switching center. Wherein the online transaction result is transmitted by the security authentication and authorization unit to the card holder terminal via Internet, and then transmitted by the card holder terminal to the acquiring subsystem;

S190: When receiving the purchase confirmation advice from the cross-bank switching center, the card issuing subsystem searches the corresponding database. When it is found that the corresponding withholding is performed, the acceptance information is returned to the acquiring subsystem, so as to inform the merchant.

Through the above steps, a realizable online payment mode is provided. Furthermore, for the card holder, not only the authentication information about whether the identity authentication is successful, but also the result of whether the transaction is successful may be obtained. It can be seen from the data exchange process that during an online transaction process, the payment process may be accomplished by accessing the card issuing subsystem once, so that the utilization rate of the resources is improved. Furthermore, in the invention, a purchase confirmation request is transmitted to the card issuing subsystem via the cross-bank switching center by the acquiring subsystem, so that the security of the payment process is enhanced.

Please refer to Figure 10 again, which may be a specific flow chart showing the method for secure online payment according to the present embodiment. This method includes the following steps:

1- A card holder logs on a merchant website via an Internet browser, chooses a commercial product, confirms and submits an order;

2- The merchant website forwards the card holder web page to a security plug-in unit, and transmits the order information and transaction information to the security plug-in unit;

3- The security plug-in unit shows the page to the card holder, the card holder inputs the card number and clicks to submit the card number;

4- The security plug-in unit transmits the information such as the card number and the transaction type to a routing unit to query routing information;

5- The routing unit determines that the present transaction uses a security authentication and authorization unit mode according to the card number input by the card holder, generates a unique transaction identifier ID, and transmits the information including the card number, transaction type, unique transaction identifier ID to the corresponding security authentication and authorization unit. The security authentication and authorization unit queries whether the card holder is registered, and returns the query result;

6- The routing unit transmits the result returned by the security authentication and authorization unit and the unique transaction identifier ID to the security plug-in unit. If the result returned is that the card holder is not registered, the process ends;

7- The security plug-in unit transmits the information including the card number of the card holder, order sheet, merchant information, unique transaction identifier ID etc. to the security authentication and authorization unit via the browser of the card holder, so that the security authentication and authorization unit may perform authentication on the card holder;

8- The security authentication and authorization unit receives the relevant information;

9- The security authentication and authorization unit orients itself to the card holder, requests the card holder to input relevant information, and performs authentication on the card holder;

10- The security authentication and authorization unit transmits the transaction information (including the unique transaction identifier ID) to a card issuing system, and the card issuing system performs relevant accounting process;

11- The security authentication and authorization unit transmits the information such as the authentication result and accounting result to the security plug-in unit via the browser of the card holder;

12- The security plug-in unit receives the relevant information, and transmits the information needed by the acquiring system to the acquiring system;

If the time out period is expired, but the security plug-in unit has not received the information returned by the security authentication and authorization unit, the relevant information is still transmitted to the acquiring system, so that the acquiring system is able to initiate the relevant confirmation transaction. The object of this process is to ensure that the successful transaction can be confirmed via the channel of the switching system in the case that due to factors such as an unstable network environment, the result cannot be transmitted to the security plug-in unit in time, although the security authentication and authorization unit has performed relevant process.

13- The acquiring system packages the relevant information as required according to the transaction type, and initiates the relevant confirmation transaction;

14- The cross-bank switching system forwards the transaction request message to the card issuing system;

15- The card issuing system searches the account system, determines whether the relevant accounting process has been performed, and determines whether to accept the transaction. The transaction processing result is returned to the cross-bank switching system;

16- The cross-bank switching system returns the transaction processing result to the acquiring system;

17- The acquiring system informs the merchant when receiving the transaction result.

Illustration of the transaction routing:

When the acquiring subsystem transmits the confirmation transaction request, the unique transaction identifier ID generated by the routing unit is carried in the message. The card issuing subsystem may determine a transaction via the card number, acquiring party code, merchant code and the unique transaction identifier ID, so as to find the transaction when receiving the confirmation transaction and confirm whether the relevant accounting process is performed.

When the acquiring subsystem does not receive the response to the confirmation transaction request with a limited period of time, the confirmation transaction may be initiated repeatedly, but it should be indicated in the confirmation transaction that the transaction is a repeated one.

When the cross-bank switching center receives the confirmation transaction request, if it is identified that the transaction is a repeated confirmation transaction, the switching system searches for the original transaction first. If the original transaction is accepted, it is not required to forward the request to the card issuing subsystem, a successful response is sent to the acquiring subsystem directly. If the original transaction is rejected, it is not required to forward the request to the card issuing subsystem, a reject response is sent to the acquiring subsystem directly. If no response was sent for the original transaction, the repeated confirmation transaction is forwarded to the card issuing subsystem.

When receiving the repeated confirmation transaction, the card issuing subsystem searches for the original transaction first. If the original transaction is not found, the repeated confirmation transaction is treated as a new transaction. If the original transaction is found, and the relevant process has been performed, no repeated process is performed, and a response is given directly.

The card issuing institution may have performed deduction before receiving the purchase confirmation transaction, and the confirmation is only performed by the acquiring institution via the purchase confirmation transaction. Therefore, the purchase confirmation transaction cannot induce reversal.

The purchase confirmation transaction is similar to a purchase transaction and may have a subsequent transaction such as cancellation. The subsequent transaction such as cancellation should match the purchase confirmation transaction.

Illustration of settlement:

The cross-bank switching center performs settlement according to the purchase confirmation transaction.

If the switching system has received the response to the purchase confirmation transaction from the card issuing institution successfully, but is unable to forward the response to the acquiring institution, the purchase confirmation transaction is still involved in the settlement, and the acquiring institution handles this case by reversal.

The acquiring institution may initiate a purchase confirmation transaction repeatedly. If several purchase confirmation transactions is received, the switching system only performs settlement for one transaction.

When the day is passed, the switching system summarizes all the confirmation transactions of this day into a file, including the accepted and settled transactions as well as the not accepted transactions, and transmits the file to the acquiring institution and card issuing institution. The card issuing institution searches the account system according to the file. If the deduction has been performed, but it is not accepted, relevant treatment is performed, so that the probability of incorrect accounting may be reduced. The acquiring institution performs searching according to the file. If a confirmation transaction is accepted but no response is received, the merchant will be informed of the result in time. Meanwhile, it is confirmed whether all the online transactions are reported in the purchase confirmation transaction according to the file. If a transaction is not included in the file, the acquiring institution should send the online transaction file additionally, and forward the file to the card issuing institution via the switching system, so that the card issuing institution may perform relevant accounting process, and the situation of single side account may be further reduced.

Illustration of error handling:

The error handling process of the purchase confirmation transaction is the same as that of the purchase process

Due to the specificity of the online transaction, during the retrieval, the note may be a consignment note of the merchant, or may be a receiving note of the card holder. The acquiring institution is responsible for obtaining relevant notes and providing the notes to the card issuing institution, so as to help the card issuing institution to determine whether the merchant has delivered the product.

When a charge-back is initiated by the card issuing institution for the online transaction result advice transaction, the reason for the charge-back is allowed to be that the merchant has not delivered the product, but is not allowed to be the problem such as card holder authentication.

The error handling of the subsequent transaction such as cancellation is the same as that of the subsequent transaction of the purchase.

After research, the applicant improves the existing online payment process provided by the VISA Company, and puts forward a new secure online payment process. As shown in Figure 11, this method includes the following steps:

S1210: The card issuing subsystem performs identity authentication on the card holder, performs withholding according to the authentication result, and returns the card holder identity authentication result and the withholding result to the card holder terminal and merchant website via Internet;

S1220: When the card holder identity authentication result and the withholding result are not received within a predefined period of time, the merchant website submits the purchase confirmation request to the card issuing subsystem via the acquiring subsystem;

S1230: The card issuing subsystem searches the database of the present subsystem. When it is found that the corresponding withholding has been performed, acceptance information is returned to the acquiring subsystem, so as to inform the merchant website. Specifically, when receiving a confirmation transaction, the card issuing subsystem searches to determine whether the corresponding withholding has been performed for the corresponding account. If yes, an acceptance response is given; otherwise, a reject response is given. The acquiring subsystem informs the merchant of the result.

When a routing server may be adopted to establish a connection between the acquiring subsystem and the card issuing subsystem, the purchase confirmation may be performed by the routing server. First, a card holder logs on a merchant website, chooses a commercial product, and confirms and submits an order. Then, the merchant website sends the card holder information to a routing server. After that, the routing server finds the corresponding card issuing institution according to the card number, and returns the routing information of the card issuing subsystem to the merchant website. Then, the merchant website sends the card holder information and the withholding information to the card issuing subsystem. The card issuing subsystem performs identity authentication on the card holder, performs withholding according to the authentication result, and returns the withholding result and the authentication result to the card holder terminal and merchant website via Internet. If the withholding result and the authentication result are not received within a predefined period of time, the merchant website may send a query request to the card issuing subsystem directly. In consideration of the security of the payment and the case that a failure may occur in the data link between the merchant website and the card issuing subsystem, the merchant website is able to send the query request to the acquiring subsystem, the query request includes at least the information such as card number and transaction identifying code. The acquiring subsystem obtains the routing information of the card issuing subsystem via the routing server, and establishes an interaction with the card issuing subsystem, i.e., sending the purchase confirmation request to the card issuing subsystem, and the card issuing subsystem returning acceptance information.

The acquiring subsystem may also establish a data exchange between the card issuing subsystem and the acquiring subsystem, i.e. sending the purchase confirmation request to the card issuing subsystem, and the card issuing subsystem returning acceptance information, via the existing cross-bank switching center provided by UnionPay. The cross-bank switching center provided by UnionPay is a relative mature technology at present. Therefore, it may be justified to use the existing cross-bank switching center to perform online payment and the subsequent online confirmation. The cross-bank switching center performs settlement according to the confirmation transaction within a predefined period of time, i.e., the cross-bank switching center summarizes and transmits all the confirmation transactions that are not accepted within a predefined period of time to the card issuing subsystem, and the card issuing subsystem compares and inspects all the confirmation transactions that are not accepted.

Only an embodiment of the present invention is disclosed above. However, the main object of the present invention is to provide an online payment platform, so that different banks adopting different transaction modes may perform transactions on this platform. Therefore, the disordered online transaction process and the technical issue of resource wasting may be resolved. The three transaction modes disclosed above are only used as an example, and should not be regarded as a limitation of the present invention.

## Claims

1. A system for secure online payment, comprising a card holder terminal, a merchant website, an acquiring subsystem and at lease one card issuing subsystem, wherein, the system further comprises a routing unit connected with the acquiring subsystem and the card issuing subsystem; wherein:
the routing unit comprises:
a storing module, which is adapted to store a transaction mode adopted by each card issuing subsystem and routing information and processing procedure corresponding to a Bank Identification Number of each card number;
a processing module, which is adapted to determine the transaction mode adopted by the corresponding card issuing subsystem according to the card number received from the acquiring subsystem, and perform processing according to the corresponding processing procedure.

2. The system for secure online payment according to claim 1, further comprises a security plug-in unit, which is connected with the acquiring subsystem or is arranged in the acquiring subsystem; the security plug-in unit is adapted to establish a data exchange between the merchant website, card holder terminal and the routing unit; card number information of a card holder is obtained via an interaction with the card holder terminal, and the routing information or corresponding processing procedure is obtained via an interaction with the routing unit.

3. The system for secure online payment according to claim 1 or 2, further comprises a security authentication and authorization unit, which is connected with the card issuing subsystem or is arranged in the card issuing subsystem; the security authentication and authorization unit at least comprises an authentication subunit and a notification subunit, the authentication subunit is adapted to perform identity authentication on the card holder; the notification subunit is adapted to constitute an online transaction result with a result of the identity authentication performed by the security authentication and authorization unit on the card holder and a withholding result from the card issuing subsystem, and transmit the online transaction result to the card holder terminal via Internet.

4. The system for secure online payment according to claim 3, wherein the routing unit stores routing information of the security authentication and authorization unit corresponding to each card issuing subsystem adopting a direct authentication and authorization mode.

5. The system for secure online payment according to claim 1 or 2, further comprises a card holder security control unit, which is adapted to establish an interaction with the card holder terminal, and receive security information indicating an identity of the card holder that is input by the card holder.

6. The system for secure online payment according to claim 5, wherein the routing unit stores routing information of the card holder security control unit corresponding to each card issuing subsystem adopting a card holder security control unit authentication mode.

7. The system for secure online payment according to claim 6, further comprises a card holder security interaction unit, the card holder security interaction unit is connected to the card holder security control unit, so as to send authentication information to the card holder via a channel that is agreed on in advance, receive authentication information input by the card holder, and perform authentication on the authentication information.

8. The system for secure online payment according to claim 7, wherein the card holder security control unit, routing unit and the card holder security interaction unit are arranged on the same server.

9. The system for secure online payment according to claim 2, wherein the security plug-in unit comprises:
a merchant authentication unit, which is adapted to perform identity authentication on a merchant who initiates an order transaction request;
an interaction control unit, which is adapted to control a data exchange with the merchant website, card holder terminal, routing unit, security authentication and authorization unit and card holder security control unit;
a data storing unit, which is adapted to store data comprising merchant information; and
an authentication and transmission unit, which is adapted to perform security authentication on data packets received and transmitted.

10. A routing server, comprising:
a storing unit, which is adapted to store a transaction mode adopted by each card issuing subsystem as well as routing information and processing procedure corresponding to a Bank Identification Number of each card number;
a processing unit for direct authentication and authorization mode, which is adapted to return routing information of a security authentication and authorization unit corresponding to the card number, when the card issuing subsystem corresponding to the card number adopts a direct authentication and authorization mode;
a processing unit for card holder security control unit authentication mode, which is adapted to return routing information of the card holder security control unit, when the card issuing subsystem corresponding to the card number adopts a card holder security control unit authentication mode; and
a processing unit for acquiring subsystem self-processing mode, which is adapted to inform the corresponding acquiring subsystem of the processing mode, when the card issuing subsystem corresponding to the card number adopts an acquiring subsystem self-processing mode,.

11. A method for secure online payment, comprising:
obtaining, by an acquiring subsystem, a transaction request and card number information of a card holder;
determining, by a routing unit, a transaction mode adopted by a corresponding card issuing subsystem according to the card number, and processing information according to a corresponding processing procedure; and
performing, by the acquiring subsystem or the card issuing subsystem, transaction settlement, and returning result information.

12. The method for secure online payment according to claim 11, wherein:
if the card issuing subsystem corresponding to the card number adopts an acquiring subsystem self-processing mode, the routing unit notifies the corresponding acquiring subsystem; and
the acquiring subsystem performs the transaction settlement and returns the result information.

13. The method for secure online payment according to claim 11, wherein:
if the card issuing subsystem corresponding to the card number adopts a card holder security control unit authentication mode, the routing unit returns routing information of the card holder security control unit;
the card holder security control unit establishes an interaction with a card holder terminal, and receives security information indicating a card holder identity that is input by the card holder;
the card issuing subsystem performs authentication and transaction settlement, and returns the result information.

14. The method for secure online payment according to claim 11, wherein:
if the card issuing subsystem corresponding to the card number adopts a direct authentication and authorization mode, the routing unit returns routing information of a security authentication and authorization unit corresponding to the card number;
the card issuing subsystem performs authentication and transaction settlement, and returns the result information.

15. A method for secure online payment, comprising:
(1) establishing an interaction between a card holder and a security plug-in unit when a merchant website receives order information from the card holder, and receiving, by the security plug-in unit, a card number for paying a transaction amount input by the card holder;
(2) forwarding, by the security plug-in unit, the card number and order information to a routing unit; determining, by the routing unit, whether a card holder security control unit authentication mode is adopted according to the card number input by the card holder; if yes, transmitting routing information of a corresponding card holder security control unit to the security plug-in unit; and transmitting, by the security plug-in unit, the card number and card holder information to the card holder security control unit;
(3) establishing, by the card holder security control unit, an interaction with the card holder, receiving security information indicating an identity of the card holder that is input by the card holder, and transmitting the security information to the security plug-in unit;
(4) packaging, by the security plug-in unit, the security information and the order information into a transaction request message, and sending the transaction request message to a corresponding card issuing subsystem via a cross-bank switching center or according to the routing information provided by the routing unit; and
(5) performing, by the card issuing subsystem, identity authentication and authorization on the transaction request message as well as performing the withholding, and returning a processing result.

16. The method for secure online payment according to claim 15, wherein the interaction between the card holder security control unit and the card holder is accomplished through the following steps:
b1: the card holder security control unit transmits the card number to a card holder security interaction unit, the card holder security interaction unit returns a User Interface Requirment to the card holder security control unit;
b2: the card holder security interaction unit transmits authentication information to the card holder via a channel that is agreed on in advance;
b3: the card holder security control unit receives input information, and transmits the input information to the card holder security interaction unit; and
b4: the card holder security interaction unit performs authentication on the input information, and transmits authenticated information to the card holder security control unit.

17. The method for secure online payment according to claim 15 or 16, further comprises:
guiding, by the security plug-in unit, the card holder to establish a Security Socket Layer security channel with the card holder security control unit to perform authentication; performing authentication on a validity of a card holder certificate and establishing a channel for providing a secure data transmission; and
when the validity of the certificate is approved, showing, by the card holder security control unit, on a browser on a card holder terminal that the card holder needs to input information, obtaining a Distinguish Name of the certificate and the card number input by the card holder via a Security Socket Layer server module, and verifying whether the certificate and the card number is effectively bound; if they are effectively bound, transmitting the information input by the card holder to the security plug-in unit; otherwise, transmitting an authentication failed result to the security plug-in unit.

18. A method for secure online payment, comprising:
(1) submitting, by a card holder terminal, an order to a merchant website;
(2) initiating, by the merchant website, a transaction request to an acquiring subsystem;
(3) establishing, by the acquiring subsystem, an interaction with the card holder terminal, and obtaining card number information input by the card holder;
(4) transmitting, by the acquiring subsystem, the card number information and transaction information to a routing unit;
(5) if a card issuing institution corresponding to the card number adopts a card issuing institution direct authentication and authorization mode, transmitting, by the routing unit, the card number information and the transaction information to a security authentication and authorization unit corresponding to the card issuing institution;
(6) performing, by the security authentication and authorization unit, authentication on the card holder;
(7) when the authentication is passed, performing withholding by a card issuing subsystem;
(8) transmitting, by the card issuing subsystem, a withholding result and an authentication result to the acquiring subsystem; and
(9) informing the merchant by the acquiring subsystem.

19. The method for secure online payment according to claim 18, wherein between step (5) and step (6), the method further comprises:
determining, by the security authentication and authorization unit, whether the card holder is registered, and returning a registration result to the routing unit;
allocating, by the routing unit, a unique transaction identification code to the present payment, and allocating the registration result and the identification code to the acquiring subsystem; and
if the registration result is that the card holder is registered, sending, by the acquiring subsystem, the card number information, order information and a service identification code to the security authentication and authorization unit, and requesting to perform authentication on the card holder.

20. The method for secure online payment according to claim 19, wherein transaction result information is transmitted to the acquiring subsystem through the following steps:
the card issuing subsystem sends an advice of an online transaction result to a cross-bank switching center, wherein the online transaction result contains a unique transaction identification code;
when a response to the online transaction result is not received within a predetermined period of time, the card issuing subsystem resends the advice of the online transaction result for a limited number of times;
when receiving the online transaction result, the cross-bank switching center returns a response message, and sends the online transaction result to the corresponding acquiring subsystem;
when the response to the online transaction result is not received within a predetermined period of time, the cross-bank switching center resends the advice of the online transaction result to the acquiring subsystem for a limited number of times.

21. The method for secure online payment according to claim 18 or 20, further comprises:
performing, by the cross-bank switching center, settlement within a predefined period of time according to a transaction identification code, wherein the cross-bank switching center collects all the online transaction result advices within the predefined period of time, and sends them to the corresponding acquiring subsystem; and
sending, by the acquiring subsystem, the online transaction result advice that was not received to the corresponding merchant website.

22. The method for secure online payment according to claim 18, wherein transaction result information is sent to the acquiring subsystem through the following steps:
the card issuing subsystem constitutes an online transaction result with the authentication result and the withholding result, and transmits the online transaction result to the card holder terminal via Internet, wherein the online transaction result further comprises a transaction identification code; the card holder terminal transmits the online transaction result to the acquiring subsystem via Internet.

23. A method for secure online payment, comprising:
(1) submitting, by a card holder terminal, an order to a merchant website;
(2) initiating, by the merchant website, a transaction request to an acquiring subsystem;
(3) establishing, by the acquiring subsystem, an interaction with the card holder terminal, and obtaining card number information input by the card holder;
(4) transmitting, by the acquiring subsystem, the card number information and transaction information to a routing unit;
(5) if a card issuing institution corresponding to the card number adopts a card issuing institution direct authentication and authorization mode, transmitting, by the routing unit, the card number information and the transaction information to a security authentication and authorization unit corresponding to the card issuing institution;
(6) performing, by the security authentication and authorization unit, authentication on the card holder;
(7) when the authentication is passed, performing withholding by a card issuing subsystem, and returning a transaction result;
(8) if the acquiring subsystem does not receive the online transaction result within a predefined period of time, sending, by the acquiring subsystem, a purchase confirmation advice to the card issuing subsystem via a cross-bank switching center or a routing unit; and
(9) when receiving the purchase confirmation advice, searching, by the card issuing subsystem, a corresponding database; when it is found that a corresponding withholding is performed, returning acceptance information to the acquiring subsystem.

24. The method for secure online payment according to claim 23, further comprises:
summarizing and transmitting, by the cross-bank switching center, all the confirmation transactions that are not accepted within a predefined period of time to the card issuing subsystem, and comparing and inspecting, by the card issuing subsystem, all the confirmation transactions that are not accepted.
